# EUROPEAN PATENT SPECIFICATION

(11) **EP 2 571 301 B1**
(45) Date of publication and mention of the grant of the patent: **10.02.2016**
(21) Application number: 12181850.4
(22) Date of filing: 27.08.2012
(51) Int. Cl.: H04W 8/24, H04M 1/66, H04L 29/06, H04M 1/725, H04W 12/08, H04W 12/12

(54) **System and method for urgent information deleting and transferring last location information in secure communication**
System und Verfahren zum dringenden Löschen von Informationen und Übertragung von Informationen über den letzten Standort in einem sicheren Kommunikationssystem
Système et procédé de suppression d'informations urgentes et de transfert des dernières données de localisation dans une communication sécurisée

(30) Priority: 13.09.2011 TR 201108983
(43) Date of publication of application: 20.03.2013
(73) Proprietor: Aselsan Elektronik Sanayi ve Ticaret Anonim Sirketi, 06370 Ankara (TR)
(72) Inventor: Kesen, Lokman, 06370 Ankara (TR); Yazici, Ali, 06370 Ankara (TR); Gunduz, Engin, 06370 Ankara (TR); Over, Kemal, 06370 Ankara (TR)
(74) Representative: Dericioglu Kurt, Ekin

(56) References cited:
- WO-A2-2009/078657
- US-A- 5 659 595
- US-A1- 2009 093 235
- US-A1- 2011 141 276

## Description

### Field of the Invention

The present invention relates to deleting the information in mobiles devices used in secure communication for security urgently and detecting the last location information of the device.

### Background of the Invention

In secure communication techniques used today, all of the users of secure mobile device can communicate securely with all users as long as they know the subscriber's number and they use the same key. In case one of the secure mobile devices gets lost, the said subscriber number is included in the banned list and it is banned as from the next list distribution. No operation such as distributing the subscriber number included in the banned list is performed.

In the current techniques, the secure mobile device users can communicate with all subscribers. However, in cases it is not desired that the users in different institutions or with different duties in the same institution communicate with each other, there is no mechanism present to provide the said supervision.

Similarly, there are no mechanisms present to control the message sent for deleting the confidential information included in the secure mobile device which are lost or are in the hands of malicious people and locking the device remotely whether it comes from an actual authorized person or the message is sent unintentionally. This situation avoids noticing the preventing the deleting messages sent by the malicious people or sent unintentionally.

United States Patent document no US2008233919, an application known in the state of the art, discloses a system and a method which limits the functions of the mobile device. This assembly disables the mobile device selectively with various mechanism. With this invention, in case the mobile device is stolen, the confidential information in the device becomes inaccessible. Furthermore, the said information can be stored in a certain location by managing remotely.

United States Patent document no US2009260088, an application known in the state of the art, discloses a system and a method which destructing the information. In the said system, the information in the mobile device can be destructed by controlling remotely or activating by itself. When the mobile device is lost, the user communicates with the mobile device through the software application and can send message command for the destruction of the information. Therefore all selected information in the device can be deleted.

United States Patent document no US2010210240, an application known in the state of the art, discloses a system and a method used for remote securing and recovery operations. In this system, remote access to the mobile device is enabled through a web site and its security is controlled. In case of a lost or stolen device, it is enabled to recover or destruct the information completely. Furthermore, the invention is also used for locking the device and locating the device. The mobile device controlled from the management center can be more than one and by this way the security of a specific group of mobile devices can be controlled.

United States Patent document no US6701160, an application known in the state of the art, discloses a system which can block the calls coming to the mobile device regionally and selectively. In this system, there is a mobile communication device comprising a memory, a controller and transceiver components. The system compares the incoming call with a plurality of lists contained in the memory. Thus, the calls in the rejection list are rejected. The selectable lists are configurable by the user. However the fixed lists in the memory cannot be changed by the user.

United States Patent document no US2011141276**,** an application known in the state of the art, discloses methods, program products, and systems for proactively securing mobile devices are described. A mobile device can proactively determine whether the mobile device is associated with a security risk and the level of the security risk. Upon determining a security risk, the mobile device can transmit coordinates of its current geographic location to a server. To protect privacy of authorized users, the transmission can be disabled by entering a password. If multiple failed password attempts are detected, the mobile device can proactively increase a security level of the device, and selectively protect files or other content stored on the mobile device. In some implementations, the mobile device can be transitioned into a surveillance mode where the mobile device records or captures information associated with one or more of user actions, ambient sound, images, a trajectory of the device, and transmits the recorded or captured information to the network resource.

United States Patent document no US5659595, an application known in the state of the art, discloses a self-disabling device for a portable terminal used in a mobile telephone network includes a register holding an identification number of the portable terminal and a buffer memory for temporarily storing short information messages transmitted by a control station of the network. One message contains a list of identifier numbers of terminals used fraudulently. A comparator compares the identifier number of the terminal with each of the identifier numbers in the list and transmission of calls by the portable terminal is disabled in response to a positive comparison by the comparator.

### Summary of the Invention

The objective of the present invention is to provide a method, as disclosed in claim 1, which supervises the calls of the subscribers before originating during secure communication, and which transfers the last location information of the device to the management center after deletion and deactivation of the device by controlling the source of the message regarding the deletion of the confidential information of the secure mobile device with the digital signature checking.

A further objective of the present invention is to provide a system which supervises the call made by the subscribers in order to communicate with each other securely according to the authorization levels of the subscribers.

### Detailed Description of the Invention

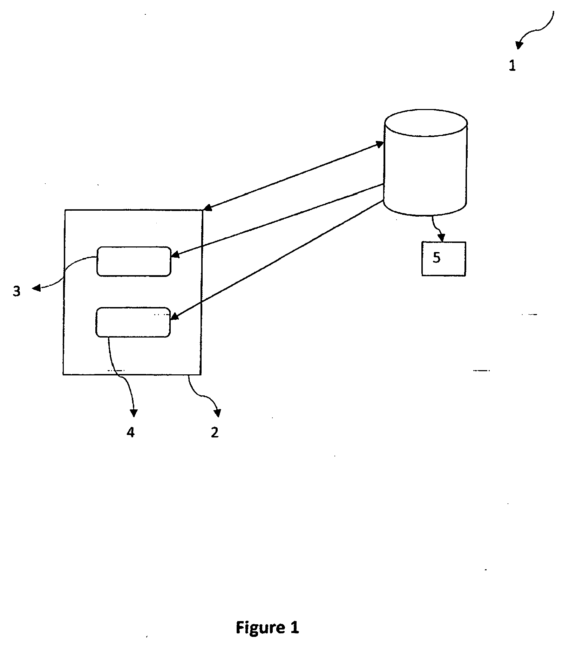

Method for urgent information deleting and transferring the last location information in secure communication developed to fulfill the objective of the present invention is illustrated in the accompanying figures wherein
Figure 1 is the schematic view of the urgent information and last location deleting system.

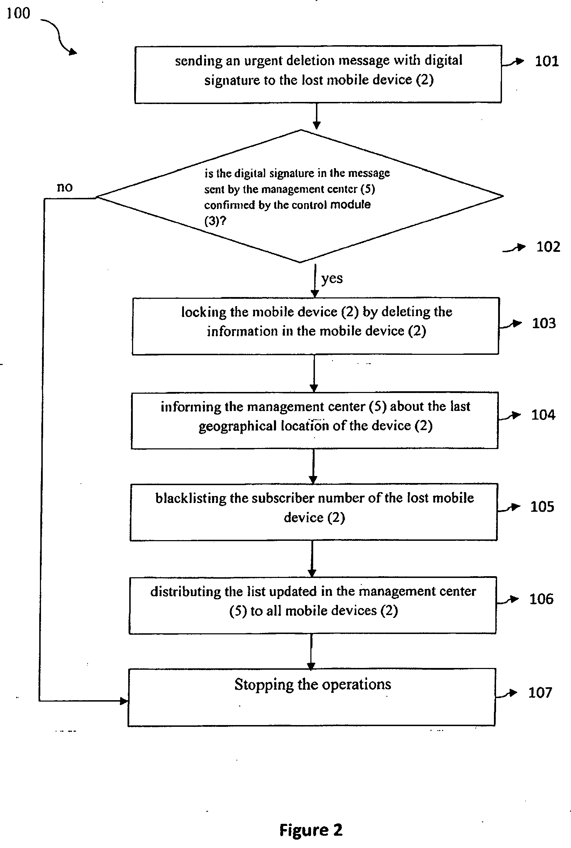

Figure 2 is the flowchart of the urgent information and last location deleting system.

The components in the figures are assigned numerals as follows:
1. Urgent information deleting and last location deleting system
2. Secure mobile device
3. Control module
4. Database
5. Management center

### 100. Method

The inventive urgent information and last location deleting system (1) essentially comprises
- at least one secure mobile device (2) by which the user makes a call and starts secure communication,
- at least one control module (3) which supervises the subscriber identity information of the calls or messages coming to the mobile device (2),
- at least one database (4) wherein the information of the secure communication subscribers are stored,
- at least one management center (5) which sends the information to the database (4), wherein information can be updated and the mobile device (2) can be locked.

In the inventive urgent information and last location deleting system (1),
secure mobile device (2) is used by the user to be able to start or receive a call. When the call is accepted, the secure mobile device (2) performs data traffic and provides secure communication.

The control module (3) is located inside the mobile device (2). The control module (3) controls the subscriber information and allows or blocks the incoming calls to the mobile device (2), outgoing calls from the device (2) or incoming messages to the device (2). The control module (3) confirms that the message comes from an authorized center by checking the digital signature of the urgent deletion message sent by the management center (5).

The database (4) is located inside the mobile device (2). The information of the subscribers is enabled to be kept in the mobile device (2).

The management center (5) is the center wherein the information of the subscribers is arranged. The arranged subscriber information is transferred to the database (4) inside the mobile device (2) from the management center (5).

In one embodiment of the invention, urgent deletion message is sent remotely from the management center (5) to a lost secure mobile device (2) for deleting the information involving confidentiality in the device (2).

The mobile device (2) informs the geographical location of the base station to which it is last connected to the management center (5) when the information therein is deleted, and it is locked by the management center (5).

In the inventive system for urgent information deleting and transferring location information (1), lists are formed in the management center (5) according to the subscriber information. The lists formed are transferred to the database (4) in the mobile device (2) from the management center (5). The control module (3) performs the controls of the calls and messages by using the transferred lists.

4 lists are composed in the management center (5).
The black list is the list which includes the banned subscriber information. If the control module (3) determines that the incoming call belongs to a subscriber number from that list, the mobile device (2) rejects the call without showing it to the user. In case the user calls a banned subscriber, the control module (3) determines that the number is on the black list and the mobile device (2) stops the calling. After the mobile device (2) stops the call, it gives a warning message to the user.

The white list is the list which includes the user group. If the control module (3) determines that the subscriber number of the incoming or outgoing call is in the white list, the mobile device (2) starts the secure communication.

The blue list includes the information of the management center (5) subscribers who can access the secure mobile device (2).

The red list is the list which includes information of top ranked subscribers. In one embodiment of the invention, when the control module (3) determines that a gradeless user starts a call for a top ranked user, the mobile device (2) blocks the call.

A method for urgent information deleting and last location transferring in secure communication (100) when one of the secure mobile devices (2) gets lost, comprises the steps of
- sending an urgent deletion message with digital signature to the lost mobile device (2) (101),
- the control module (3) controlling the digital signature in the message sent from the management center (5) (102),
- locking the mobile device (2) by deleting the information in the mobile device (2) (103),
- informing the management center (5) about the last geographical location of the device (2) (104),
- blacklisting the subscriber number of the lost mobile device (2) (105),
- distributing the list updated in the management center (5) to all mobile devices (2) (106),
- stopping the operations (107).

In the method for urgent information deleting and transferring last location information in the secure communication (100), urgent deletion information is sent to the device (2) from the management center (5) with a digital signature (101). The control module (3) determines whether the message is actually sent by an authorized center by controlling the digital signature coming with the said message (102). Thus, the messages sent unintentionally or sent by the malicious people are avoided. After the digital signature is confirmed, the mobile device (2) deletes the information in its content (103). The device (2) is locked from the management center (5) and it becomes unusable (103). The locked mobile device (2) sends the location information of the base station closest to its geographical location to the management center (5) (104).

The number of the device (2) subscriber whose last position is determined is blacklisted in the management center (5) (105). Upon the subscriber number is blacklisted, the lists are updated in the management center (5). The updated lists are sent to mobile devices (2) of all subscribers and stored in the database (4) (106). Thus, all subscribers are prevented from securely communicating with the lost device (2). After the updated lists are sent to the mobile devices (2) or the digital signature confirmation is not performed in step 102, the operation is ended (107).

With the inventive system (1) and a method (100) for urgent information deleting and transferring last location information in secure communication a mechanism is provided which will provide supervision for the situations in case the secure mobile device (2) users in different institutions or having different duties in same institutions are not desired to communicate with each other.

Furthermore, the inventive system (1) and a method (100) for urgent information deleting and transferring last location information in secure communication can also understand that the message is sent by an authorized person by adding digital signature during sending urgent information deletion message remotely to the mobile device (2). Thus, the problem of not being able to realize the deletion messages sent by the malicious people or sent unintentionally present in the prior techniques.

Within the scope of this basic concept, it is possible to develop various embodiments of the inventive system (1) and method (100) for urgent information deleting and transferring the last location information in secure communication. The invention cannot be limited to the examples described herein and it is essentially as defined in the claims.

## Claims

1. A method for urgent information deleting in secure communication (100) **characterized by** the step of
- sending an urgent deletion message with a digital signature to a lost mobile device (2) by a management center (5) for deleting the information involving confidentiality in the lost mobile device (2),
- determining whether the urgent deletion message is actually sent from an authorized management center (5) by a control module (3) of the lost mobile device (2) through controlling the digital signature coming with the urgent deletion message,
- locking the lost mobile device (2) by deleting the information in the lost mobile device (2), if the digital signature is confirmed in the determining step,
- blacklisting the subscriber number of the lost mobile device (2) in the management center (5) thereby updating a blacklist formed in the management center (5),
- distributing the updated blacklist in the management center (5) to all mobile devices (2) to prevent said all mobile devices (2) from communicating to the lost mobile device (2).

2. A method for urgent information deleting in secure communication (100) according to claim 1, **characterized by** the step of informing the management center (5) about the last geographical location of the lost mobile device (2).

## Patentansprüche

1. Ein Verfahren zum dringenden Löschen von Informationen in gesicherter Kommunikation (100) **gekennzeichnet durch** die Verfahrensschritte;
- Zusenden einer dringenden Löschmeldung mit einer digitalen Signatur zu einem verlorenen Mobilgerät (2) von einem Verwaltungszentrum (5) zur Löschung die Information, die in dem verlorenen Mobilgerät (2) mit Vertraulichkeit verbunden ist,
- Ermitteln, ob die dringende Löschmeldung tatsächlich von einem autorisierten Verwaltungszentrum (5) **durch** ein Steuermodul (3) des verlorengegangenen Mobilgeräts (2) zugesendet ist, **durch** das Kontrollieren der digitalen Signatur, die mit der dringenden Löschmeldung kommt,
- Verschliessung des verlorenen Mobilgeräts (2) **durch** Löschen der Information in dem verlorenen Mobilgerät (2), wenn die digitale Signatur im Schritt des Ermittelns bestätigt ist,
- Schwarze Liste aufstellen für die Teilnehmerrufnummer des verlorengegangenen Mobilgeräts (2) in der Verwaltungszentrum (5), wobei die in der Verwaltungszentrum (5) aufgestellten schwarze Liste aktualisiert wird,
- Verteilung von aktualisierter schwarzen Liste aus der Verwaltungszentrum (5) zu allen Mobilgeräten (2), um es zu verhindern, dass die erwähnten Mobilgeräte (2) mit dem verlorengegangenen Mobilgerät (2) kommunizieren.

2. Ein Verfahren zum dringenden Löschen von Informationen in sicherer Kommunikation (100) gemäß Anspruch 1, **gekennzeichnet durch** den Schritt der Informierung der Verwaltungszentrum (5) über die letzte geographische Lage des verlorenen Mobilgeräts (2).

## Revendications

1. La méthode d'effacement rapide de l'information urgente dans la communication sécurisé (100) **caractérisée par** les étapes suivantes :L'envoi d'un message d'effacement urgent avec une signature numérique à un appareil mobile (2) par un centre de gestion (5) pour effacer l'information de nature confidentielle dans l'appareil perdu (2), La détermination si le message d'effacement urgent est actuellement envoyé d'un centre de gestion accrédité (5) par un module de contrôle (3) de l'appareil mobile perdu (2) en contrôlant la signature numérique venant avec le message d'effacement urgent, Le blocage de l'appareil mobile perdu (2) en effaçant l'information dans l'appareil mobile (2) si la signature numérique est confirmée dans l'étape de détermination, La mise du numéro d'abonné de l'appareil mobile perdu (2) sur la liste noire dans le centre de gestion (5) ainsi en mettant à jour la liste noire formée dans le centre de gestion (5), La distribution de la liste noire mise à jour dans le centre de gestion (5) a tous les appareils mobiles (2) pour empêcher lesdits appareils mobiles (2) de communiquer avec l'appareil mobile perdu (2).

2. D'effacement rapide de l'information urgente dans la communication sécurisé (100) selon la revendication 1, **caractérisée par** l'étape d'informer le centre de gestion (5) à propos de la position géographique dernière de l'appareil mobile perdu (2).
